# EUROPEAN PATENT SPECIFICATION

(11) **EP 4 368 374 B1**
(45) Date of publication and mention of the grant of the patent: **08.07.2026**
(21) Application number: 23196789.4
(22) Date of filing: 12.09.2023
(51) Int. Cl.: B29C 65/30, B29C 65/00, B30B 15/06, B29C 65/18, B29L 31/30

(54) **SYSTEMS AND METHODS FOR JOINING THERMOPLASTIC COMPONENTS**
SYSTEME UND VERFAHREN ZUM VERBINDEN VON THERMOPLASTISCHEN KOMPONENTEN
SYSTÈMES ET PROCÉDÉS D'ASSEMBLAGE DE COMPOSANTS THERMOPLASTIQUES

(30) Priority: 11.11.2022 US 202218054610
(43) Date of publication of application: 15.05.2024
(73) Proprietor: The Boeing Company, Arlington, VA 22202 (US)
(72) Inventor: Werntges, Paul G., Arlington, 22202 (US); Hickman, Gregory J., Arlington, 22202 (US); Knutson, Samuel J., Arlington, 22202 (US)
(74) Representative: Witte, Weller & Partner Patentanwälte mbB

(56) References cited:
- EP-B1- 2 505 339
- DE-A1- 102007 062 755
- DE-A1- 102009 014 249
- US-A- 4 356 052
- US-B1- 9 090 022

## Description

### FIELD

This application relates to joining of thermoplastic components and, more particularly, to systems and methods for joining thermoplastic components using thermal conduction.

### BACKGROUND

Composite materials are used in various applications. For example, fiber-reinforced plastic composites have relatively high strength-to-weight ratios and, therefore, are commonly used in the aerospace, as well as other industries, such as the automotive industry.

Traditionally, thermoset fiber-reinforced plastic composites, such as carbon fiber-reinforced epoxy-based composites, were used in the aerospace industry. However, in recent years, there has been a growing interest in using thermoplastic resins in fiber-reinforced plastic composites.

The inert nature of thermoplastic materials, meaning the nonreactive nature of the thermoplastic polymer within composite material, makes joining thermoplastic materials very difficult. Therefore, thermoplastic materials are typically joined together with mechanical fasteners, which requires the additional steps of drilling the thermoplastic materials and inserting mechanical fasteners, thereby potentially generating foreign object debris (FOD) during drilling and increasing overall weight due to the presence of the mechanical fasteners.

Document DE 10 2009 014249 A1, according to its abstract, states a device for laminating a film-tape-like multilayer thermoplastic film arrangement that comprises heatable press plates and cooling surfaces, wherein a width of said press plates and cooling surfaces is greater than or equal to a width of the film arrangement, wherein the film arrangement is arranged in the position thereof relative to the press plates in such a way that press plate edges lie at the grid center and the cooling surfaces are arranged with a distance up to 3 mm next to a press plate edge and beginning in the same grid, wherein a length of the cooling surfaces is greater than or equal to a length of the press plates, wherein one press plate and one cooling surface are arranged on both sides of the film arrangement, wherein the press plates are fastened to press plate holding blocks that can be moved or are supported by first press tables, and wherein the cooling surfaces are part of cooling blocks that can be moved or are supported by second press tables.

Document EP 2 505 339 B1, according to its abstract, states that a heavy transformer is essential to an impulse heat sealer because the heater wire is short and wide. However, when thin slits are made in the strip heater wire from the opposite sides and the strip heater wire is elongated in zigzag, the transformer can be eliminated. However, in order to use the elongated heater wire in countries using a rated voltage of 200-240V without risk, such a structure that a hand does not touch the bare heater wire semipermanently, generated heat comes out quickly on the surface and disappears is required. A ceramics thin plate of good heat conductor and electrical insulator consisting of aluminum nitride, for example, and having a thickness of 0.6 mm is placed on the heating portion of a zigzag heater wire of a metal resistor thin plate, the entire periphery is surrounded by a thermal electrical insulator such as a glass cloth while leaving the upper surface thereof, and then the whole is made to adhere and fixed onto the heat dissipation base. The good heat conductor and electrical insulator is further reinforced with a heater reinforcement, as required.

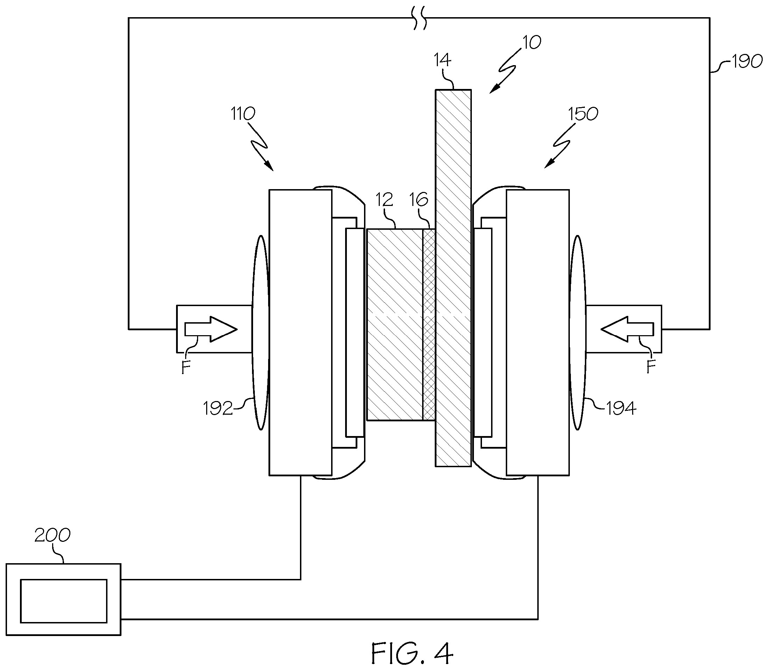

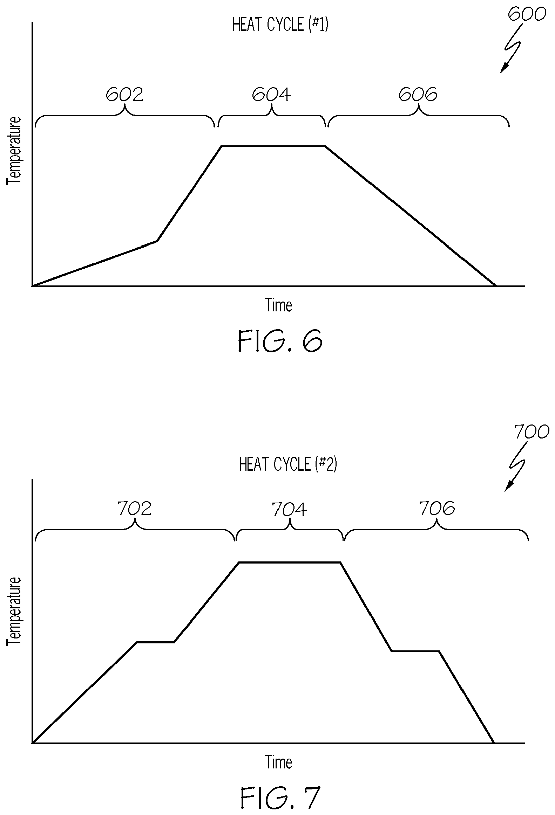

Paragraphs [0028] and [0043] of EP 2 505 339 B1, state:
With respect to heat dissipation, whether or not to separate the insulator on the surface from the insulator at the bottom is not important. Therefore, for ease of manufacturing, an integrated insulator 16 having an angular U-shaped cross section as illustrated Fig. 4 or 7 may be used. Such an integrated insulator can be easily made from, for example, Sarcon Tape, which includes a silicone rubber, or a porous cordierite (a type of porcelain). Therefore, a case where an insulator that is affixed to the bottom and an insulator that surrounds the surface are made at the same time (i.e., integrally formed) is included in the scope of the claims. On the contrary, a plurality of insulators may be stacked. Alternatively, a method of filling a gap with a silicone-based insulator may be used. In this case, the insulator also serves as an adhesive.

The term "fluoropolymer tape" may mean tape having a substrate made of a glass cloth or the like. Replaceability of the tape need not be considered, because the temperature of the heater according to the embodiment does not become abnormally high. Therefore, for example, a thin film may be formed and strongly baked on the surface of the thermally conductive electrical insulator or the heater reinforcing member. In this case, a silicone rubber may be used as the material of the thin film. Fluoropolymer tape, silicone rubber, and an application film made of such a material will be collectively referred to as a release film. The thermal conductivity of a release film made of a fluoropolymer or a silicone rubber is very low, i.e., conducts only a small amount of heat. Heat is conducted when the thickness of the release film is as thin as about 0.1 mm. The thinner the thickness of the release film is, the larger the amount of conducted heat is. Omitting the release film is the best. Laminate films having a surface made of nylon, paper, or nonwoven fabric do not melt and do not adhere to the heater. Therefore, if the heater is used only for sealing such films, the release film is not necessary. Therefore, a heater that does not include a release film is included in the scope of the claims."

Document US 9 090 022 B1, according to its abstract, states that a portable belt splicing apparatus is provided for joining the ends of one or more conveyor belts together. In one form, the belt splicing apparatus has upper and lower platens, with one formed of a metallic material that allows for operational deflection of the platens under elevated operation pressures while resisting permanent deformation upon being subjected to elevated operation temperatures. An elongate central region of the platens is heated by a heating element and the metallic material restricts the flow of heat from the elongate central region to elongate side edge portions so that the side edge portions remain cooler. In another form, a self-contained portable conveyor belt splicing apparatus is provided having an on-board fan device for rapid cooling of the clamped belt end and platens. An on-board control system is configured to receive power from different types of standard power supplies and supplies power to on-board components.

Document US 4 356 052 A, according to its abstract, states that disclosed is a method and apparatus to facilitate the method of discontinuously laminating at least two thermoplastic layers together. The layers are heated and pressed together over all but a selected window portion of the layers to facilitate lamination between the layers at all points except the selected window portions. Relief grid images can be embossed in the selected window portion or holograms or other difficult to forge inserts can be provided in these window areas prior to lamination. During lamination, the reduced or absence of heating in these window portions permits lamination of the card without destruction of the selected window portion insert.

Document DE 10 2007 062755 A1, according to its abstract, states a heating press and a method for operating a heating press. The heating press, consisting of an upper pressure plate, a lower pressure plate, two insulations, in particular in the form of insulating layers, an upper heating plate and a lower heating plate. Strip material to be processed can be introduced between the heating plates. The upper insulation is arranged below the upper pressure plate and the lower insulation is arranged above the lower pressure plate. Furthermore, an upper heating element is arranged between the upper insulation and the upper heating plate and a lower heating element is arranged between the lower insulation and the lower heating plate, upper pressure rods being arranged between the upper pressure plate and the upper heating plate and lower pressure rods being arranged between the lower pressure plate and the lower heating plate.

Accordingly, those skilled in the art continue with research and development efforts in the field of joining thermoplastic materials.

### SUMMARY

According to the present disclosure, a system and a method as defined in the independent claims are provided. Further embodiments are defined in the dependent claims. Although the scope is only defined by the claims, the below embodiments, examples, and aspects are present for aiding in understanding the background and advantages.

Disclosed are systems for joining a first thermoplastic component of a workpiece with a second thermoplastic component of the workpiece.

In one example, the disclosed system for joining a first thermoplastic component of a workpiece with a second thermoplastic component of the workpiece includes a first joining plate assembly comprising a housing, a heat plate, and a thermal insulator disposed between the housing and the heat plate, wherein the heat plate defines a heating surface; a second joining plate assembly opposed from the first joining plate assembly; and a clamping assembly engaged with both the first joining plate assembly and the second joining plate assembly.

In another example, the disclosed system for joining a first thermoplastic component of a workpiece with a second thermoplastic component of the workpiece includes a first joining plate assembly comprising a housing, a heat plate, a thermal insulator disposed between the housing and the heat plate, wherein the heat plate defines a heating surface, and a release film received over at least a portion of the heating surface of the heat plate; a second joining plate assembly opposed from the first joining plate assembly, the second joining plate assembly comprising a second housing, a second heat plate, a second thermal insulator disposed between the second housing and the second heat plate, wherein the second heat plate defines a second heating surface, and a second release film received over at least a portion of the second heating surface of the second heat plate; and a clamping assembly engaged with both the first joining plate assembly and the second joining plate assembly, the clamping assembly applies a clamping force that urges the first joining plate assembly toward the second joining plate assembly.

Also disclosed are methods for joining a first thermoplastic component of a workpiece with a second thermoplastic component of the workpiece.

In one example, the disclosed method for joining a first thermoplastic component of a workpiece with a second thermoplastic component of the workpiece includes (1) clamping the workpiece between a first joining plate assembly and a second joining plate assembly; and (2) transferring heat from at least one of the first joining plate assembly and the second joining plate assembly to the workpiece to establish a joint between the first thermoplastic component and the second thermoplastic component.

Other examples of the disclosed systems and methods for joining a first thermoplastic component of a workpiece with a second thermoplastic component of the workpiece will become apparent from the following detailed description, the accompanying drawings, and the appended claims.

### BRIEF DESCRIPTION OF THE DRAWINGS

Fig. 1 is a schematic side view, partially in section, of one example of the disclosed system for joining a first thermoplastic component of a workpiece with a second thermoplastic component of the workpiece;
Fig. 2 is a front elevational view of the first joining plate assembly of the system shown in Fig. 1;
Fig. 3 is a side cross-sectional view of a workpiece that can be joined using the system of Fig. 1;
Fig. 4 is a schematic side view, partially in section, of the workpiece shown in Fig. 3 being clamped by the system shown in Fig. 1;
Fig. 5 is a schematic side view, partially in section, of the workpiece of Fig. 3 received in the system of Fig. 1, shown after a joint has been formed in the workpiece;
Fig. 6 is a graphical depiction of an example predefined heat cycle undergone by one heat plate of the system of Fig. 1;
Fig. 7 is a graphical depiction of an example predefined heat cycle undergone by another, opposed heat plate of the system of Fig. 1;
Fig. 8 is a block diagram depicting one example of the disclosed method for joining a first thermoplastic component of a workpiece with a second thermoplastic component of the workpiece;
Fig. 9 is a block diagram of aircraft production and service methodology; and
Fig. 10 is a schematic illustration of an aircraft.

### DETAILED DESCRIPTION

Disclosed are systems and methods for joining a first thermoplastic component of a workpiece with a second thermoplastic component of the workpiece. The disclosed systems and methods may facilitate joining thermoplastic components in a cleaner manner and without adding weight, as compared to the drilling and fastening techniques traditionally used for joining thermoplastic components. Therefore, the disclosed systems and methods may yield joined thermoplastic components at reduced cost and improved cycle time.

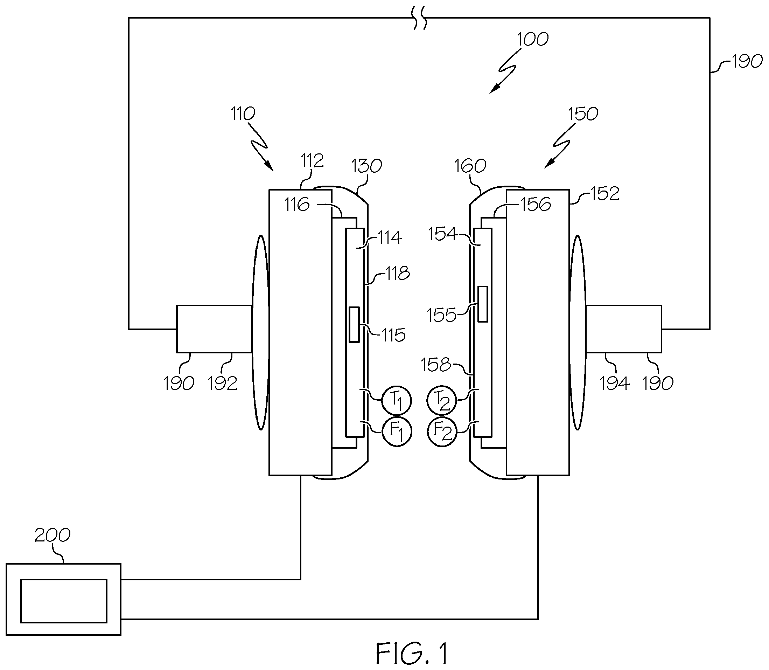

Referring to Fig. 1, in one example, the disclosed system 100 for joining thermoplastic components includes first joining plate assembly 110, a second joining plate assembly 150 opposed from the first joining plate assembly 110, and a clamping assembly 190 engaged with both the first joining plate assembly 110 and the second joining plate assembly 150.

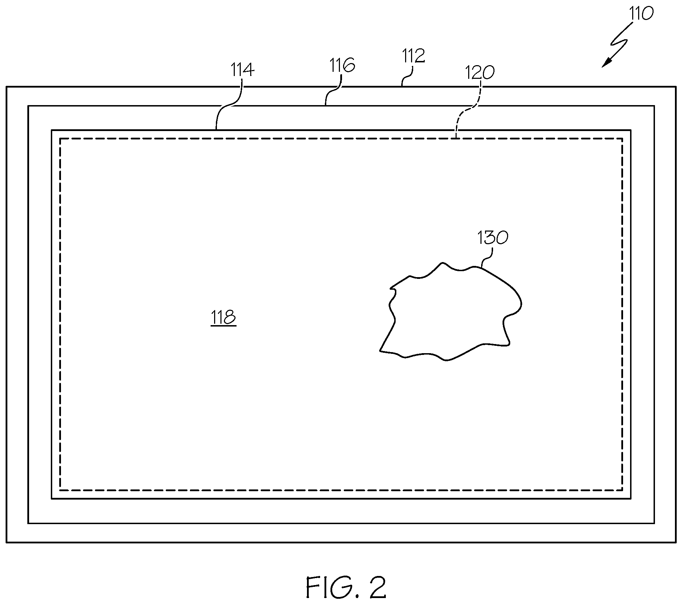

As shown in Figs. 1 and 2, the first joining plate assembly 110 of the disclosed system 100 may include a housing 112, a heat plate 114, and a thermal insulator 116 disposed between the housing 112 and the heat plate 114. The housing 112 may provide backing and structural support to the first joining plate assembly 110. The thermal insulator 116 may be at least partially connected to the housing 112, and may thermally insulate the housing 112 from the heat generated by the heat plate 114. For example, but without limitation, the thermal insulator 116 may be formed from, or may include, a ceramic material, which may thermally insulate the housing 112 from the heat generated by the heat plate 114.

The heat plate 114 may be at least partially connected to the thermal insulator 116, and may generate heat. In one particular example construction, the heat plate 114 may include one or more resistive heating elements 115, which generate heat in response to the flow of electrical current. The amount of heat generated by the heat plate 114 may vary and may be controlled, such as by a controller 200 (Fig. 1), which may be in communication (e.g., wired or wireless) with the first joining plate assembly 110, and which may regulate the flow of electric current to the resistive heating elements 115.

The heat plate 114 defines a heating surface 118 that is heated by the heat generated by the heat plate 114. In one expression, the heat plate 114 is capable of heating the heating surface 118 to a temperature of at least 200 °C. In another expression, the heat plate 114 is capable of heating the heating surface 118 to a temperature of at least 250 °C. In another expression, the heat plate 114 is capable of heating the heating surface 118 to a temperature of at least 300 °C. In another expression, the heat plate 114 is capable of heating the heating surface 118 to a temperature of at least 350 °C. In another expression, the heat plate 114 is capable of heating the heating surface 118 to a temperature of at least 400 °C. In yet another expression, the heat plate 114 is capable of heating the heating surface 118 to a temperature between about 250 °C and about 350 °C.

The first joining plate assembly 110 may also include a temperature sensor T₁. The temperature sensor T₁ may be positioned to sense the temperature of the heating surface 118 of the heat plate 114. For example, the temperature sensor T₁ may be a thermocouple or the like, and may be incorporated into the first joining plate assembly 110, such as into the heat plate 114. The temperature sensor T₁ may be in communication (e.g., wired or wireless) with the controller 200 to facilitate control of the temperature of the heating surface 118 of the heat plate 114.

In one particular implementation, the system 100 is configured as a relatively small, hand-held device. As a hand-held device, the system 100 may be easily portable (such as by an individual technician). Therefore, the heating surface 118 of the heat plate 114 may have a surface area 120 that is relatively small. In one example, the surface area 120 of the heating surface 118 of the heat plate 114 is at most 0.092903 m² (1 ft²). In another example, the surface area 120 of the heating surface 118 of the heat plate 114 is at most 0.0464515 m² (0.5 ft²). In yet another example, the surface area 120 of the heating surface 118 of the heat plate 114 is at most 0.0232257 m² (0.25 ft²).

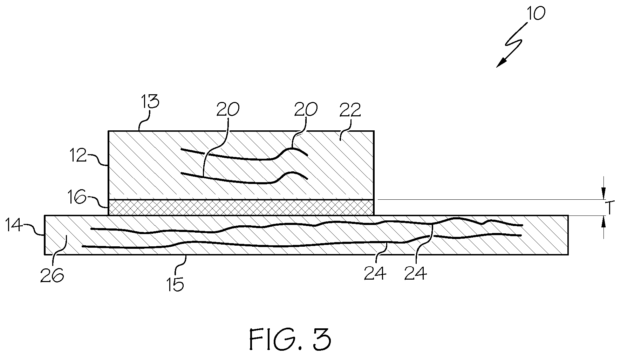

In one particular construction, the heat plate 114 may be relatively flexible and conformable for engaging a contoured surface of a workpiece 10. Therefore, when the heating surface 118 of the heat plate 114 is engaged with a surface 13 (Fig. 3) of a workpiece 10 (Fig. 3) that is contoured, the heat plate 114 conforms to the surface 13.

The first joining plate assembly 110 may also include a release film 130. The release film 130 may be received over at least a portion of (if not all of) the heating surface 118 of the heat plate 114. Compositionally, the release film 130 may be selected for use with thermoplastic composites, such as carbon fiber-reinforced thermoplastic composites. As one specific, non-limiting example, the release film 130 may be a polyimide film and/or may include a polyimide.

Referring to Fig. 1, the second joining plate assembly 150 may have a configuration that is substantially the same as the first joining plate assembly 110. Specifically, the second joining plate assembly 150 of the disclosed system 100 may include a housing 152, a heat plate 154, and a thermal insulator 156 disposed between the housing 152 and the heat plate 154. The housing 152 may provide backing and structural support to the second joining plate assembly 150. The thermal insulator 156 may be at least partially connected to the housing 152, and may thermally insulate the housing 152 from the heat generated by the heat plate 154. For example, but without limitation, the thermal insulator 156 may be formed from, or may include, a ceramic material, which may thermally insulate the housing 152 from the heat generated by the heat plate 154.

The heat plate 154 may be at least partially connected to the thermal insulator 156, and may generate heat. In one particular example construction, the heat plate 154 may include one or more resistive heating elements 155, which generate heat in response to the flow of electrical current. The amount of heat generated by the heat plate 154 may vary and may be controlled, such as by a controller 200, which may be in communication (e.g., wired or wireless) with the second joining plate assembly 150, and which may regulate the flow of electric current to the resistive heating elements 155. The heat plate 154 of the second joining plate assembly 150 may be controllable by the controller 200 independently of the heat plate 114 of the first joining plate assembly 110.

The heat plate 154 defines a heating surface 158 that is heated by the heat generated by the heat plate 154. In one expression, the heat plate 154 is capable of heating the heating surface 158 to a temperature of at least 200 °C. In another expression, the heat plate 154 is capable of heating the heating surface 158 to a temperature of at least 250 °C. In another expression, the heat plate 154 is capable of heating the heating surface 158 to a temperature of at least 300 °C. In another expression, the heat plate 154 is capable of heating the heating surface 158 to a temperature of at least 350 °C. In another expression, the heat plate 154 is capable of heating the heating surface 158 to a temperature of at least 400 °C. In yet another expression, the heat plate 154 is capable of heating the heating surface 158 to a temperature between about 250 °C and about 350 °C.

The second joining plate assembly 150 may also include a temperature sensor T₂. The temperature sensor T₂ may be positioned to sense the temperature of the heating surface 158 of the heat plate 154. For example, the temperature sensor T₂ may be a thermocouple or the like, and may be incorporated into the second joining plate assembly 150, such as into the heat plate 154. The temperature sensor T₂ may be in communication (e.g., wired or wireless) with the controller 200, which controls of the temperature of the heating surface 158 of the heat plate 154.

As previously mentioned, the system 100 may be configured as a relatively small, hand-held device. Therefore, the heating surface 158 of the heat plate 154 may have a surface area 159 that is relatively small. In one example, the surface area 159 of the heating surface 158 of the heat plate 154 is at most 0.092903 m² (1 ft²). In another example, the surface area 159 of the heating surface 158 of the heat plate 154 is at most 0.0464515 m² (0.5 ft²). In yet another example, the surface area 159 of the heating surface 158 of the heat plate 154 is at most 0.0232257 m² (0.25 ft²). In one particular configuration, the heating surface 158 of the heat plate 154 of the second joining plate assembly 150 has a surface area 159 that is substantially equal to the surface area 120 of the heating surface 118 of the heat plate 114 of the first joining plate assembly 110.

In one particular construction, the heat plate 154 of the second joining plate assembly 150 may be relatively flexible and conformable. Therefore, when the heating surface 158 of the heat plate 154 is engaged with a surface 15 (Fig. 3) of a workpiece 10 (Fig. 3) that is contoured, the heat plate 154 conforms to the surface 15.

The second joining plate assembly 150 may also include a release film 160. The release film 160 may be received over at least a portion of (if not all of) the heating surface 158 of the heat plate 154. Compositionally, the release film 160 may be selected for use with thermoplastic composites, such as carbon fiber-reinforced thermoplastic composites. As one specific, non-limiting example, the release film 160 may be a polyimide film and/or may include a polyimide.

While the second joining plate assembly 150 is shown and described having a configuration that is substantially the same as the configuration of the first joining plate assembly 110, various alternative configurations are contemplated and the use of alternative configurations for the second joining plate assembly 150 (as compared to the first joining plate assembly 110) will not result in a departure from the scope of the present disclosure. For example, in one example alternative configuration, the second joining plate assembly 150 may be without heat plate and thermal insulator.

Referring to Figs. 1 and 4, the clamping assembly 190 of the disclosed system 100 is engaged with both the first joining plate assembly 110 and the second joining plate assembly 150. For example, the clamping assembly 190 includes a first clamp member 192 and a second clamp member 194. The first clamp member of the clamping assembly 190 may be engaged with the first joining plate assembly 110 and the second clamp member 194 of the clamping assembly 190 may be engaged with the second joining plate assembly 150.

The clamping assembly 190 may apply a clamping force F that urges the first joining plate assembly 110 toward the second joining plate assembly 150. Therefore, as shown in Fig. 4, when a workpiece 10 is positioned between the first joining plate assembly 110 and the second joining plate assembly 150, the clamping force F is transferred to the workpiece 10 by the first joining plate assembly 110 and the second joining plate assembly 150.

The clamping assembly 190 may be any apparatus or system capable of clamping a workpiece 10 (Fig. 3) between the first joining plate assembly 110 and the second joining plate assembly 150 such that a clamping force F is applied to the workpiece 10. As one specific, non-limiting example, the clamping assembly 190 may be (or may include) a C-clamp. As another specific, non-limiting example, the clamping assembly 190 may be (or may include) a vise.

Optionally, as shown in Fig. 1, the first joining plate assembly 110 may include a force sensor F₁ and/or the second joining plate assembly 150 may include a force sensor F₂. The force sensors F₁, F₂ may be positioned to sense the clamping force F (Fig. 4) being applied by the first joining plate assembly 110 and the second joining plate assembly 150 to the workpiece 10 (Figs. 3 and 4). For example, the force sensors F₁, F₂ may be strain gauges or the like, and may be incorporated into the first joining plate assembly 110 and the second joining plate assembly 150. The force sensors F₁, F₂ may optionally be in communication (e.g., wired or wireless) with the controller 200 or other feature (e.g., a warning on the first joining plate assembly 110 or on the clamping assembly 190) to provide a visual, audible and/or haptic indication when the applied clamping force F has exceeded a predefined threshold value and/or if the applied clamping force F is not evenly (or otherwise properly) applied.

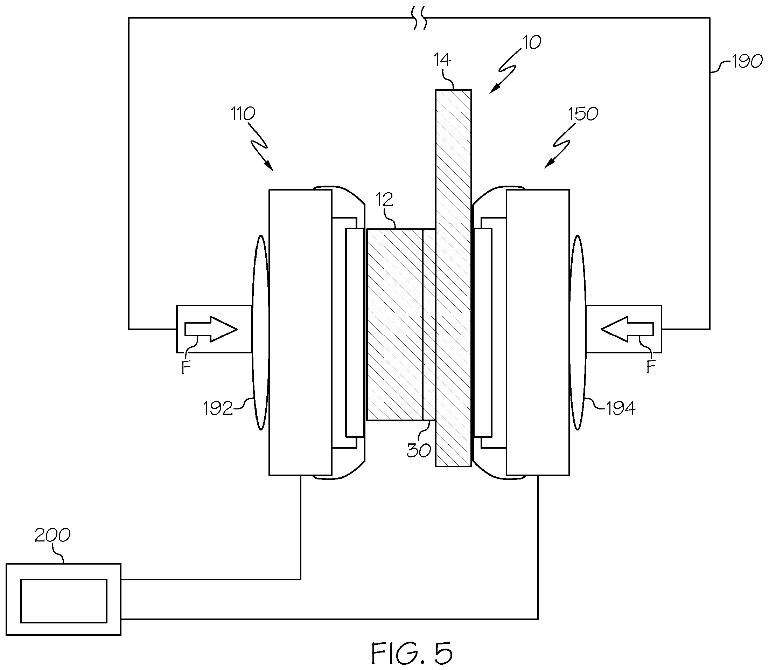

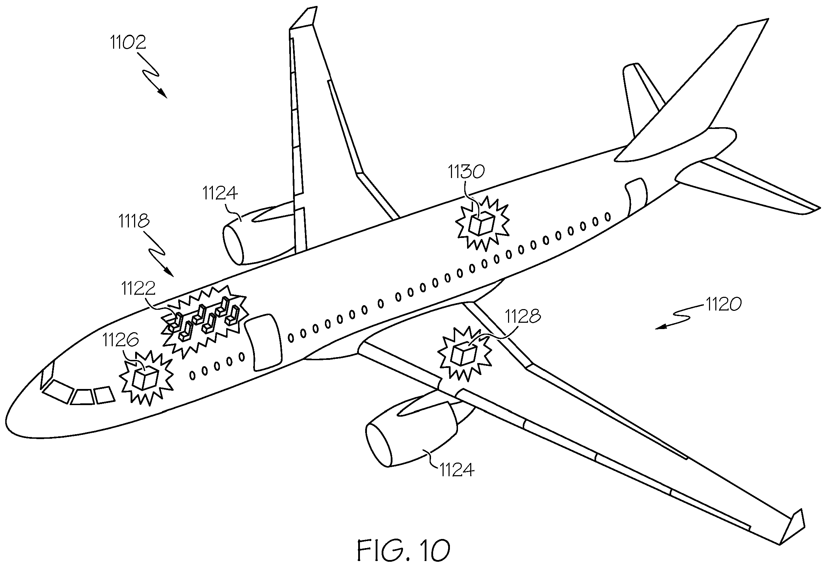

Referring to Figs. 3-5, the disclosed system 100 may be used to form a joint 30 (Fig. 5) between a first thermoplastic component 12 and a second thermoplastic component 14 of a workpiece 10. Both the first thermoplastic component 12 of the workpiece 10 and the second thermoplastic component 14 of the workpiece 10 may be components of an aircraft 1102 (Fig. 10). However, non-aerospace applications are also contemplated.

The first thermoplastic component 12 may include a first reinforcement material 20 (e.g., carbon fiber) embedded in a first thermoplastic matrix material 22 (e.g., a member of the polyaryletherketone (PAEK) family of thermoplastic materials). The second thermoplastic component 14 may include a second reinforcement material 24 (e.g., carbon fiber) embedded in a second thermoplastic matrix material 26 (e.g., a member of the polyaryletherketone (PAEK) family of thermoplastic materials). In one example, the first thermoplastic matrix material 22 may be substantially compositionally identical to the second thermoplastic matrix material 26. In another example, the first thermoplastic matrix material 22 may be substantially compositionally different from the second thermoplastic matrix material 26.

As shown in Figs. 3 and 4, in one particular implementation, a thermoplastic film 16 may be positioned between the first thermoplastic component 12 and the second thermoplastic component 14 of the workpiece 10. Compositionally, the thermoplastic film 16 may be, for example, a member of the polyaryletherketone (PAEK) family of thermoplastic materials. Structurally, the thermoplastic film 16 may have, for example, a cross-sectional thickness T of about 0.0127 mm (0.0005 inch) to about 0.254 mm (0.01 inch). Significantly, the thermoplastic film 16 may have a lower melting temperature than the first thermoplastic component 12 of the workpiece 10 and a lower melting temperature than the second thermoplastic component 14 of the workpiece 10 (i.e., both the first melting temperature and the second melting temperature are greater than the third melting temperature).

Referring to Figs. 1 and 3-7, the controller 200 of the disclosed system 100 may control the heat plate 114 of the first joining plate assembly 110 and the heat plate 154 of the second joining plate assembly 150 based on sensed temperature signals received from the temperature sensors T₁, T₂ to heat the heating surface 118 of the heat plate 114 according to a first predefined heat cycle 600 (Fig. 6) and the heating surface 158 of the heat plate 154 according to a second predefined heat cycle 700 (Fig. 7). The applied heat may transfer into the workpiece 10 by thermal conduction and may melt at least a portion of the workpiece 10 (e.g., the thermoplastic film 16) to form a joint 30 (Fig. 5) between the first thermoplastic component 12 and the second thermoplastic component 14 of the workpiece 10.

The first predefined heat cycle 600 and the second predefined heat cycle 700 may be customized for a particular workpiece 10 (Fig. 3). The first predefined heat cycle 600 may include a temperature ramp-up period 602, a steady/hold period 604, and a cool-down period 606. Likewise, the second predefined heat cycle 700 may include a temperature ramp-up period 702, a steady/hold period 704, and a cool-down period 706. In one implementation, the first predefined heat cycle 600 and/or the second predefined heat cycle 700 may be generated by modeling. In another implementation, the first predefined heat cycle 600 and/or the second predefined heat cycle 700 may be generated by testing (e.g., trial and error).

Thus, upon execution of the first predefined heat cycle 600 and the second predefined heat cycle 700, a joint 30 may be formed between the first thermoplastic component 12 and the second thermoplastic component 14 of the workpiece 10.

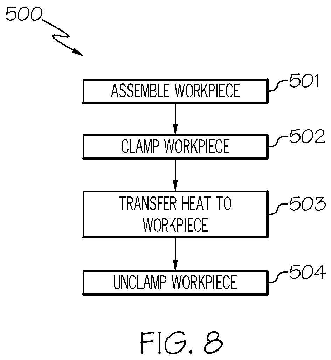

Referring now to Fig. 8, also disclosed is a method 500 for joining thermoplastic components. In one example, the disclosed method 500 may begin with the step of assembling 501 a workpiece 10, as shown in Fig. 3. The step of assembling 501 the workpiece 10 may be performed prior to other steps, such as prior to the clamping 502 the workpiece 10.

As shown in Fig. 3, the step of assembling 501 a workpiece 10 may include positioning a first thermoplastic component 12 against a second thermoplastic component 14. Both the first thermoplastic component 12 of the workpiece 10 and the second thermoplastic component 14 of the workpiece 10 may be components of an aircraft 1102 (Fig. 10). However, non-aerospace applications are also contemplated.

The first thermoplastic component 12 may include a first reinforcement material 20 (e.g., carbon fiber) embedded in a first thermoplastic matrix material 22 (e.g., a member of the polyaryletherketone (PAEK) family of thermoplastic materials). The second thermoplastic component 14 may include a second reinforcement material 24 (e.g., carbon fiber) embedded in a second thermoplastic matrix material 26 (e.g., a member of the polyaryletherketone (PAEK) family of thermoplastic materials). In one example, the first thermoplastic matrix material 22 may be substantially compositionally identical to the second thermoplastic matrix material 26. In another example, the first thermoplastic matrix material 22 may be substantially compositionally different from the second thermoplastic matrix material 26.

In one particular implementation, the step of assembling 501 a workpiece 10 may further include positioning a thermoplastic film 16 between the first thermoplastic component 12 and the second thermoplastic component 14. Compositionally, the thermoplastic film 16 may be, for example, a member of the polyaryletherketone (PAEK) family of thermoplastic materials. Structurally, the thermoplastic film 16 may have, for example, a cross-sectional thickness T of about 0.0127 mm (0.0005 inch) to about 0.254 mm (0.01 inch). Significantly, the thermoplastic film 16 may have a lower melting temperature than the first thermoplastic component 12 of the workpiece 10 and a lower melting temperature than the second thermoplastic component 14 of the workpiece 10.

Referring back to Fig. 8, the disclosed method 500 further includes the step of clamping 502 the workpiece 10 between a first joining plate assembly 110 (Fig. 1) and a second joining plate assembly 150 (Fig. 1). The step of clamping 502 may be performed after the step of assembling 501.

The first joining plate assembly 110 (Fig. 1) may be configured as shown and described herein. Likewise, the second joining plate assembly 150 (Fig. 1) may be configured as shown and described herein.

As shown in Fig. 4, the clamping 502 may be performed by a clamping assembly 190. For example, the clamping assembly 190 may include a first clamp member 192 and a second clamp member 194. The first clamp member of the clamping assembly 190 may be engaged with the first joining plate assembly 110 and the second clamp member 194 of the clamping assembly 190 may be engaged with the second joining plate assembly 150.

The clamping assembly 190 may apply a clamping force F that urges the first joining plate assembly 110 toward the second joining plate assembly 150. Therefore, when a workpiece 10 is positioned between the first joining plate assembly 110 and the second joining plate assembly 150, the clamping force F is transferred to the workpiece 10 by the first joining plate assembly 110 and the second joining plate assembly 150.

The clamping assembly 190 may be any apparatus or system capable of clamping a workpiece 10 (Fig. 3) between the first joining plate assembly 110 and the second joining plate assembly 150 such that a clamping force F is applied to the workpiece 10. As one specific, non-limiting example, the clamping assembly 190 may be (or may include) a C-clamp. As another specific, non-limiting example, the clamping assembly 190 may be (or may include) a vise.

Referring to Figs. 5 and 8, the disclosed method 500 further includes the step of transferring 503 heat from at least one of the first joining plate assembly 110 and the second joining plate assembly 150 to the workpiece 10 to establish a joint 30 between the first thermoplastic component 12 and the second thermoplastic component 14 of workpiece 10. The step of transferring 503 heat may be performed after the step of clamping 502 or simultaneously with the step of clamping 502.

At this point, those skilled in the art will appreciate that the step of transferring 503 heat from at least one of the first joining plate assembly 110 and the second joining plate assembly 150 to the workpiece 10 may include heating (e.g., resistively heating) the heat plate 114 of the first joining plate assembly 110 and the heat plate 154 of the second joining plate assembly 150 and executing the first predefined heat cycle 600 and the second predefined heat cycle 700 shown in Figs. 6 and 7. At this point, those skilled in the art will also appreciate that the transferring 503 of heat from at least one of the first joining plate assembly 110 and the second joining plate assembly 150 to the workpiece 10 (e.g., to the thermoplastic film 16 within the workpiece 10) is primarily effected by thermal conduction.

Referring to Fig. 8, the disclosed method 500 may further include the step of unclamping 504 the workpiece 10 from the first joining plate assembly 110 (Fig. 1) and the second joining plate assembly 150 (Fig. 1). The step of unclamping 504 may be performed after completion of the step of transferring 503 heat. For example, the step of unclamping 504 may be performed after the first joining plate assembly 110 completes the first predefined heat cycle 600 (Fig. 6) and the second joining plate assembly 150 completes the second predefined heat cycle 700 (Fig. 7).

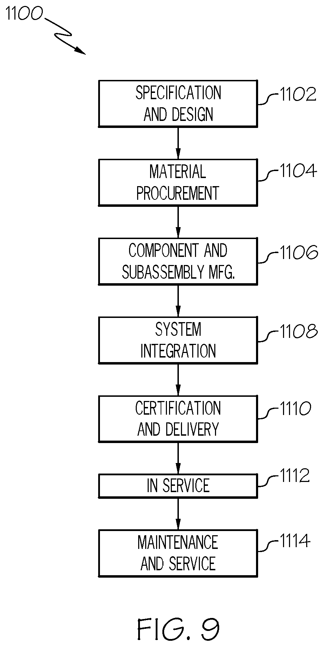

Examples of the subject matter disclosed herein may be described in the context of aircraft manufacturing and service method 1100 as shown in Fig. 9 and aircraft 1102 as shown in Fig. 10. In one or more examples, the disclosed systems and methods for joining a first thermoplastic component of a workpiece with a second thermoplastic component of the workpiece may be used in aircraft manufacturing. During pre-production, illustrative method 1100 may include specification and design (block 1104) of aircraft 1102 and material procurement (block 1106). During production, component and subassembly manufacturing (block 1108) and system integration (block 1110) of aircraft 1102 may take place. Thereafter, aircraft 1102 may go through certification and delivery (block 1112) to be placed in service (block 1114). While in service, aircraft 1102 may be scheduled for routine maintenance and service (block 1116). Routine maintenance and service may include modification, reconfiguration, refurbishment, etc. of one or more systems of aircraft 1102.

Each of the processes of illustrative method 1100 may be performed or carried out by a system integrator, a third party, and/or an operator (e.g., a customer). For the purposes of this description, a system integrator may include, without limitation, any number of aircraft manufacturers and major-system subcontractors; a third party may include, without limitation, any number of vendors, subcontractors, and suppliers; and an operator may be an airline, leasing company, military entity, service organization, and so on.

As shown in Fig. 10, aircraft 1102 produced by illustrative method 1100 may include airframe 1118 with a plurality of high-level systems 1120 and interior 1122. Examples of high-level systems 1120 include one or more of propulsion system 1124, electrical system 1126, hydraulic system 1128, and environmental system 1130. Any number of other systems may be included. Although an aerospace example is shown, the principles disclosed herein may be applied to other industries, such as the automotive industry. Accordingly, in addition to aircraft 1102, the principles disclosed herein may apply to other vehicles, e.g., land vehicles, marine vehicles, space vehicles, etc.

The disclosed systems and methods for joining a first thermoplastic component of a workpiece with a second thermoplastic component of the workpiece may be employed during any one or more of the stages of the manufacturing and service method 1100. For example, components or subassemblies corresponding to component and subassembly manufacturing (block 1108) may be fabricated or manufactured in a manner similar to components or subassemblies produced while aircraft 1102 is in service (block 1114). Also, one or more examples of the apparatus(es), method(s), or combination thereof may be utilized during production stages (block 1108 and block 1110), for example, by substantially expediting assembly of or reducing the cost of aircraft 1102. Similarly, one or more examples of the apparatus or method realizations, or a combination thereof, may be utilized, for example and without limitation, while aircraft 1102 is in service (block 1114) and/or during maintenance and service (block 1116).

There is provided a system for joining a first thermoplastic component of a workpiece with a second thermoplastic component of the workpiece, the system comprising:
a first joining plate assembly comprising a housing, a heat plate, and a thermal insulator disposed between the housing and the heat plate, wherein the heat plate defines a heating surface;
a second joining plate assembly opposed from the first joining plate assembly; and
a clamping assembly engaged with both the first joining plate assembly and the second joining plate assembly.

Preferably, the heat plate comprises a resistive heating element.

Preferably, the heat plate is capable of heating the heating surface to a temperature of at least 300 °C.

Preferably, the heat plate is capable of heating the heating surface to a temperature between about 250 °C and about 350 °C.

Preferably, the heating surface of the heat plate has a surface area of at most 0.092903 m² (1 ft²).

Preferably, the heating surface of the heat plate has a surface area of at most 0.0464515 m² (0.5 ft²).

Preferably, the heating surface of the heat plate has a surface area of at most 0.0232257 m² (0.25 ft²).

Preferably, the heating surface of the heat plate is flexible and conformable for engaging a contoured surface of a workpiece.

Preferably, the heat plate is at least partially connected to the thermal insulator.

Preferably, the thermal insulator comprises a ceramic material.

Preferably, the thermal insulator is at least partially connected to the housing.

Preferably, the first joining plate assembly further comprising a release film received over at least a portion of the heating surface of the heat plate.

Preferably, release film comprises a polyimide film.

Preferably, the second joining plate assembly comprises a second housing, a second heat plate, and a second thermal insulator disposed between the second housing and the second heat plate, wherein the second heat plate defines a second heating surface.

Preferably, the second heat plate is controllable independently of the heat plate of the first joining plate assembly.

Preferably, the second heating surface has a surface area that is substantially equal to the surface area of the heating surface of the heat plate of the first joining plate assembly.

Preferably, the second joining plate assembly further comprises a second release film received over at least a portion of the second heating surface of the second heat plate.

Preferably, the clamping assembly comprises a first clamp member engaged with the first joining plate assembly and a second clamp member engaged with the second joining plate assembly.

Preferably, the clamping assembly applies a clamping force that urges at least one of the first joining plate assembly and the second joining plate assembly toward another of the first joining plate assembly and the second joining plate assembly.

Preferably, the clamping assembly comprises at least one sensor positioned to sense the clamping force.

Preferably, the clamping assembly comprises a C-clamp.

Preferably, the clamping assembly comprises a vise.

Preferably, the system further comprises a controller in communication with at least one of the first joining plate assembly and the second joining plate assembly.

Preferably, the first joining plate assembly comprises a temperature sensor positioned to sense a temperature of the heating surface of the heat plate, the temperature sensor being in communication with the controller.

Preferably, the controller controls the heat plate to heat the heating surface according to a predefined heat cycle.

Preferably, the system is configured as a hand-held device.

There is further provided a system for joining a first thermoplastic component of a workpiece with a second thermoplastic component of the workpiece, the system comprising:
a first joining plate assembly comprising a housing, a heat plate, a thermal insulator disposed between the housing and the heat plate, wherein the heat plate defines a heating surface, and a release film received over at least a portion of the heating surface of the heat plate;
a second joining plate assembly opposed from the first joining plate assembly, the second joining plate assembly comprising a second housing, a second heat plate, a second thermal insulator disposed between the second housing and the second heat plate, wherein the second heat plate defines a second heating surface, and a second release film received over at least a portion of the second heating surface of the second heat plate; and
a clamping assembly engaged with both the first joining plate assembly and the second joining plate assembly, the clamping assembly applying a clamping force that urges the first joining plate assembly toward the second joining plate assembly.

There is further provided a method for joining a first thermoplastic component of a workpiece with a second thermoplastic component of the workpiece, the method comprising:
clamping the workpiece between a first joining plate assembly and a second joining plate assembly; and
transferring heat from at least one of the first joining plate assembly and the second joining plate assembly to the workpiece to establish a joint between the first thermoplastic component and the second thermoplastic component.

Preferably, the clamping is performed by a C-clamp or a vise.

Preferably, the first joining plate assembly comprises a housing, a heat plate, a thermal insulator disposed between the housing and the heat plate, wherein the heat plate defines a heating surface, and a release film received over at least a portion of the heating surface of the heat plate.

Preferably, the second joining plate assembly comprises a second housing, a second heat plate, a second thermal insulator disposed between the second housing and the second heat plate, wherein the second heat plate defines a second heating surface, and a second release film received over at least a portion of the second heating surface of the second heat plate.

Preferably, the transferring heat from at least one of the first joining plate assembly and the second joining plate assembly to the workpiece comprises resistively heating the heat plate and the second heat plate.

Preferably, the transferring heat from at least one of the first joining plate assembly and the second joining plate assembly to the workpiece is primarily effected by thermal conduction.

Preferably, the transferring heat from at least one of the first joining plate assembly and the second joining plate assembly to the workpiece is performed according to a predefined heat cycle.

Preferably, the method further comprises unclamping the workpiece after completion of the predefined heat cycle.

Preferably, the method further comprises assembling the workpiece prior to the clamping the workpiece.

Preferably, the assembling the workpiece comprises positioning a thermoplastic film between the first thermoplastic component and the second thermoplastic component.

Preferably, the thermoplastic film has a cross-sectional thickness of about 0,0127 mm (0.0005 inch) to about 0,254 mm (0.01 inch).

Preferably, the first thermoplastic component has a first melting temperature, the second thermoplastic component has a second melting temperature, and the thermoplastic film has a third melting temperature, and wherein both the first melting temperature and the second melting temperature are greater than the third melting temperature.

Preferably, the first thermoplastic component comprises a first reinforcement material embedded in a first thermoplastic matrix material.

Preferably, the second thermoplastic component comprises a second reinforcement material embedded in a second thermoplastic matrix material.

Preferably, the first thermoplastic matrix material is compositionally substantially identical to the second thermoplastic matrix material.

Preferably, the first thermoplastic component and the second thermoplastic component are components of an aircraft.

Although various examples of the disclosed systems and methods for joining a first thermoplastic component of a workpiece with a second thermoplastic component of the workpiece have been shown and described, modifications may occur to those skilled in the art upon reading the specification. The present application includes such modifications and is limited only by the scope of the claims.

## Claims

1. A system (100) for joining a first thermoplastic component (12) of a workpiece (10) with a second thermoplastic component (14) of the workpiece (10), the system (100) comprising:
the workpiece (10);
a first joining plate assembly (110) comprising a housing (112), a heat plate (114), and a thermal insulator (116) disposed between the housing (112) and the heat plate (114), wherein the heat plate (114) defines a heating surface (118);
a second joining plate assembly (150) opposed from the first joining plate assembly (110); and
a clamping assembly (190) engaged with both the first joining plate assembly (110) and the second joining plate assembly (150),
wherein the heating surface (118) of the heat plate (114) is flexible and conformable for engaging a contoured surface of the workpiece (10),
wherein the system (100) is configured to transfer heat from the first joining plate assembly (110) to a thermoplastic film (16) within the workpiece (10) by thermal conduction to establish a joint (30) between the first thermoplastic component (12) and the second thermoplastic component (14) of the workpiece;
wherein the first thermoplastic component (12) has a first melting temperature, the second thermoplastic component (14) has a second melting temperature, and the thermoplastic film (16) has a third melting temperature, and wherein both the first melting temperature and the second melting temperature are greater than the third melting temperature.

2. The system (100) of Claim 1, wherein the heat plate (114) comprises a resistive heating element (115).

3. The system (100) of Claim 1 or 2, wherein the heat plate (114) is capable of heating the heating surface (118) to a temperature of at least 300 °C.

4. The system (100) of any of Claims 1 to 3, wherein the heat plate (114) is capable of heating the heating surface (118) to a temperature between about 250 °C and about 350 °C.

5. The system (100) of any of Claims 1 to 4, wherein the heating surface (118) of the heat plate (114) has a surface area (120) of at most 0.092903 m² (1 ft²), in particular at most 0.046452 m²(0.5 ft²), in particular at most 0.02322576 m² (0.25 ft²).

6. The system (100) of any of Claims 1 to 5, wherein the heat plate (114) is at least partially connected to the thermal insulator (116).

7. The system (100) of any of Claims 1 to 6, wherein the thermal insulator (116) comprises a ceramic material.

8. The system (100) of any of Claims 1 to 7, wherein the thermal insulator (116) is at least partially connected to the housing (112).

9. The system (100) of any of Claims 1 to 8, wherein the first joining plate assembly (110) further comprising a release film (130) received over at least a portion of the heating surface (118) of the heat plate (114).

10. The system (100) of any of Claims 1 to 9, wherein the second joining plate assembly (150) comprises a second housing (152), a second heat plate (154), and a second thermal insulator (156) disposed between the second housing (152) and the second heat plate (154), wherein the second heat plate (154) defines a second heating surface (158).

11. The system (100) of any of Claims 1 to 10, wherein the clamping assembly (190) comprises a first clamp member (192) engaged with the first joining plate assembly (110) and a second clamp member (194) engaged with the second joining plate assembly (150).

12. The system (100) of any of Claims 1 to 11, wherein the clamping assembly (190) applies a clamping force (F) that urges at least one of the first joining plate assembly (110) and the second joining plate assembly (150) toward another of the first joining plate assembly (110) and the second joining plate assembly (150), wherein the clamping assembly (190) is capable of clamping the workpiece (10) between the first joining plate assembly (110) and the second joining plate assembly (150) such that the clamping force is applied to the workpiece (10).

13. The system of any of Claims 1 to 12, wherein the applied heat transfers into the workpiece (10) by thermal conduction and melts the thermoplastic film (16) to form the joint (30) between the first thermoplastic component (12) and the second thermoplastic component (14) of the workpiece (10).

14. A method (500) for joining a first thermoplastic component (12) of a workpiece (10) with a second thermoplastic component (14) of the workpiece (10), the method (500) comprising:
clamping (502) the workpiece (10) between a first joining plate assembly (110) and a second joining plate assembly (150), wherein the first joining plate assembly (110) comprises a housing (112), a heat plate (114), and a thermal insulator (116) disposed between the housing (112) and the heat plate (114), and wherein the heat plate (114) defines a heating surface (118);
transferring (503) heat from at least one of the first joining plate assembly (110) and the second joining plate assembly (150) to the workpiece (10) to establish a joint (30) between the first thermoplastic component (12) and the second thermoplastic component (14);
assembling (501) the workpiece (10) prior to the clamping (502) the workpiece (10), wherein the assembling (501) the workpiece comprises positioning a thermoplastic film (16) between the first thermoplastic component (12) and the second thermoplastic component (14),
wherein the first thermoplastic component (12) has a first melting temperature, the second thermoplastic component (14) has a second melting temperature, and the thermoplastic film (16) has a third melting temperature, and wherein both the first melting temperature and the second melting temperature are greater than the third melting temperature, and
wherein the heating surface (118) of the heat plate (114) is flexible and conformable for engaging a contoured surface of a workpiece (10).

15. The method (500) of claim 14, wherein the applied heat transfers into the workpiece (10) by thermal conduction and melts the thermoplastic film (16) to form the joint (30) between the first thermoplastic component (12) and the second thermoplastic component (14).

## Patentansprüche

1. System (100) zum Fügen einer ersten thermoplastischen Komponente (12) eines Werkstücks (10) mit einer zweiten thermoplastischen Komponente (14) des Werkstücks (10), wobei das System (100) aufweist:
das Werkstück (10);
eine erste Fügeplattenanordnung (110), die ein Gehäuse (112), eine Heizplatte (114) und einen zwischen dem Gehäuse (112) und der Heizplatte (114) angeordneten Wärmeisolator (116) aufweist, wobei die Heizplatte (114) eine Heizoberfläche (118) definiert;
eine zweite Fügeplattenanordnung (150), die der ersten Fügeplattenanordnung (110) gegenüberliegt; und
eine Klemmanordnung (190), die sowohl mit der ersten Fügeplattenanordnung (110) als auch mit der zweiten Fügeplattenanordnung (150) in Eingriff steht,
wobei die Heizoberfläche (118) der Heizplatte (114) flexibel und anpassbar für ein Eingreifen mit einer konturierten Oberfläche des Werkstücks (10) ist,
wobei das System (100) dazu konfiguriert ist, Wärme von der ersten Fügeplattenanordnung (110) zu einem thermoplastischen Film (16) innerhalb des Werkstücks (10) durch Wärmeleitung zu übertragen, um eine Verbindung (30) zwischen der ersten thermoplastischen Komponente (12) und der zweiten thermoplastischen Komponente (14) des Werkstücks herzustellen;
wobei die erste thermoplastische Komponente (12) eine erste Schmelztemperatur hat, die zweite thermoplastische Komponente (14) eine zweite Schmelztemperatur hat und der thermoplastische Film (16) eine dritte Schmelztemperatur hat, und wobei sowohl die erste Schmelztemperatur als auch die zweite Schmelztemperatur größer als die dritte Schmelztemperatur sind.

2. System (100) nach Anspruch 1, wobei die Heizplatte (114) ein Widerstandsheizelement (115) aufweist.

3. System (100) nach Anspruch 1 oder 2, wobei die Heizplatte (114) in der Lage ist, die Heizoberfläche (118) auf eine Temperatur von zumindest 300 °C zu erhitzen.

4. System (100) nach einem der Ansprüche 1 bis 3, wobei die Heizplatte (114) fähig ist, die Heizoberfläche (118) auf eine Temperatur zwischen ca. 250 °C und ca. 350 °C zu erhitzen.

5. System (100) nach einem der Ansprüche 1 bis 4, wobei die Heizoberfläche (118) der Heizplatte (114) eine Oberflächen-Fläche (120) von höchstens 0,092903 m² (1 ft²), insbesondere höchstens 0,046452 m² (0,5 ft²), insbesondere höchstens 0,02322576 m² (0,25 ft²) aufweist.

6. System (100) nach einem der Ansprüche 1 bis 5, wobei die Heizplatte (114) zumindest teilweise mit dem Wärmeisolator (116) verbunden ist.

7. System (100) nach einem der Ansprüche 1 bis 6, wobei der Wärmeisolator (116) ein Keramikmaterial aufweist.

8. System (100) nach einem der Ansprüche 1 bis 7, wobei der Wärmeisolator (116) zumindest teilweise mit dem Gehäuse (112) verbunden ist.

9. System (100) nach einem der Ansprüche 1 bis 8, wobei die erste Fügeplattenanordnung (110) des Weiteren einen Trennfilm (130) aufweist, der über zumindest einem Teil der Heizoberfläche (118) der Heizplatte (114) aufgenommen ist.

10. System (100) nach einem der Ansprüche 1 bis 9, wobei die zweite Fügeplattenanordnung (150) ein zweites Gehäuse (152), eine zweite Heizplatte (154) und einen zwischen dem zweiten Gehäuse (152) und der zweiten Heizplatte (154) angeordneten zweiten Wärmeisolator (156) aufweist, wobei die zweite Heizplatte (154) eine zweite Heizoberfläche (158) definiert.

11. System (100) nach einem der Ansprüche 1 bis 10, wobei die Klemmanordnung (190) ein erstes Klemmelement (192), das mit der ersten Fügeplattenanordnung (110) in Eingriff steht, und ein zweites Klemmelement (194), das mit der zweiten Fügeplattenanordnung (150) in Eingriff steht, aufweist.

12. System (100) nach einem der Ansprüche 1 bis 11, wobei die Klemmanordnung (190) eine Klemmkraft (F) ausübt, die zumindest eine von der ersten Fügeplattenanordnung (110) und der zweiten Fügeplattenanordnung (150) zu einer anderen von der ersten Fügeplattenanordnung (110) und der zweiten Fügeplattenanordnung (150) hin drückt, wobei die Klemmanordnung (190) fähig ist, das Werkstück (10) zwischen der ersten Fügeplattenanordnung (110) und der zweiten Fügeplattenanordnung (150) einzuklemmen, so dass die Klemmkraft auf das Werkstück (10) ausgeübt wird.

13. System nach einem der Ansprüche 1 bis 12, wobei die zugeführte Wärme sich durch Wärmeleitung in das Werkstück (10) überträgt und den thermoplastischen Film (16) schmilzt, um die Verbindung (30) zwischen der ersten thermoplastischen Komponente (12) und der zweiten thermoplastischen Komponente (14) des Werkstücks (10) zu bilden.

14. Verfahren (500) zum Fügen einer ersten thermoplastischen Komponente (12) eines Werkstücks (10) mit einer zweiten thermoplastischen Komponente (14) des Werkstücks (10), wobei das Verfahren (500) umfasst:
Einklemmen (502) des Werkstücks (10) zwischen einer ersten Fügeplattenanordnung (110) und einer zweiten Fügeplattenanordnung (150), wobei die erste Fügeplattenanordnung (110) ein Gehäuse (112), eine Heizplatte (114) und einen zwischen dem Gehäuse (112) und der Heizplatte (114) angeordneten Wärmeisolator (116) aufweist, und wobei die Heizplatte (114) eine Heizoberfläche (118) definiert;
Übertragen (503) von Wärme von zumindest einer von der ersten Fügeplattenanordnung (110) und der zweiten Fügeplattenanordnung (150) auf das Werkstück (10), um eine Verbindung (30) zwischen der ersten thermoplastischen Komponente (12) und der zweiten thermoplastischen Komponente (14) herzustellen;
Zusammenbauen (501) des Werkstücks (10) vor dem Einklemmen (502) des Werkstücks (10), wobei das Zusammenbauen (501) des Werkstücks ein Positionieren eines thermoplastischen Films (16) zwischen der ersten thermoplastischen Komponente (12) und der zweiten thermoplastischen Komponente (14) umfasst,
wobei die erste thermoplastische Komponente (12) eine erste Schmelztemperatur hat, die zweite thermoplastische Komponente (14) eine zweite Schmelztemperatur hat und der thermoplastische Film (16) eine dritte Schmelztemperatur hat, und wobei sowohl die erste Schmelztemperatur als auch die zweite Schmelztemperatur größer als die dritte Schmelztemperatur sind, und
wobei die Heizoberfläche (118) der Heizplatte (114) flexibel und anpassbar für ein Eingreifen mit einer konturierten Oberfläche eines Werkstücks (10) ist.

15. Verfahren (500) nach Anspruch 14, wobei sich die zugeführte Wärme durch Wärmeleitung in das Werkstück (10) überträgt und den thermoplastischen Film (16) schmilzt, um die Verbindung (30) zwischen der ersten thermoplastischen Komponente (12) und der zweiten thermoplastischen Komponente (14) zu bilden.

## Revendications

1. Système (100) permettant d'assembler un premier composant thermoplastique (12) d'une pièce de travail (10) avec un second composant thermoplastique (14) de la pièce de travail (10), le système (100) comprenant :
la pièce de travail (10) ;
un premier ensemble plaque d'assemblage (110) comprenant un boîtier (112), une plaque chauffante (114), et un isolant thermique (116) disposé entre le boîtier (112) et la plaque chauffante (114), dans lequel la plaque chauffante (114) définit une surface de chauffage (118) ;
un second ensemble plaque d'assemblage (150) opposé au premier ensemble plaque d'assemblage (110) ; et
un ensemble de serrage (190) en prise à la fois avec le premier ensemble plaque d'assemblage (110) et le second ensemble plaque d'assemblage (150),
dans lequel la surface de chauffage (118) de la plaque chauffante (114) est flexible et conformable pour venir en prise avec une surface profilée de la pièce de travail (10),
dans lequel le système (100) est conçu pour transférer de la chaleur du premier ensemble plaque d'assemblage (110) à un film thermoplastique (16) à l'intérieur de la pièce de travail (10) par conduction thermique afin d'établir un joint (30) entre le premier composant thermoplastique (12) et le second composant thermoplastique (14) de la pièce de travail ;
dans lequel le premier composant thermoplastique (12) a une première température de fusion, le second composant thermoplastique (14) a une deuxième température de fusion, et le film thermoplastique (16) a une troisième température de fusion, et dans lequel la première température de fusion et la deuxième température de fusion sont toutes deux supérieures à la troisième température de fusion.

2. Système (100) selon la revendication 1, dans lequel la plaque chauffante (114) comprend un élément chauffant résistif (115).

3. Système (100) selon la revendication 1 ou 2, dans lequel la plaque chauffante (114) est capable de chauffer la surface de chauffage (118) à une température d'au moins 300 °C.

4. Système (100) selon l'une quelconque des revendications 1 à 3, dans lequel la plaque chauffante (114) est capable de chauffer la surface de chauffage (118) à une température comprise entre environ 250 °C et environ 350 °C.

5. Système (100) selon l'une quelconque des revendications 1 à 4, dans lequel la surface de chauffage (118) de la plaque chauffante (114) a une superficie (120) d'au plus 0,092903 m² (1 pied²), en particulier d'au plus 0,046452 m² (0,5 pied²), en particulier d'au plus 0,02322576 m² (0,25 pied²).

6. Système (100) selon l'une quelconque des revendications 1 à 5, dans lequel la plaque chauffante (114) est au moins partiellement connectée à l'isolant thermique (116).

7. Système (100) selon l'une quelconque des revendications 1 à 6, dans lequel l'isolant thermique (116) comprend un matériau céramique.

8. Système (100) selon l'une quelconque des revendications 1 à 7, dans lequel l'isolant thermique (116) est au moins partiellement connecté au boîtier (112).

9. Système (100) selon l'une quelconque des revendications 1 à 8, dans lequel le premier ensemble plaque d'assemblage (110) comprend en outre un film de libération (130) reçu sur au moins une partie de la surface de chauffage (118) de la plaque chauffante (114).

10. Système (100) selon l'une quelconque des revendications 1 à 9, dans lequel le second ensemble plaque d'assemblage (150) comprend un second boîtier (152), une seconde plaque chauffante (154), et un second isolant thermique (156) disposé entre le second boîtier (152) et la seconde plaque chauffante (154), dans lequel la seconde plaque chauffante (154) définit une seconde surface de chauffage (158).

11. Système (100) selon l'une quelconque des revendications 1 à 10, dans lequel l'ensemble de serrage (190) comprend un premier élément de serrage (192) en prise avec le premier ensemble plaque d'assemblage (110) et un second élément de serrage (194) en prise avec le second ensemble plaque d'assemblage (150).

12. Système (100) selon l'une quelconque des revendications 1 à 11, dans lequel l'ensemble de serrage (190) applique une force de serrage (F) qui pousse au moins l'un du premier ensemble plaque d'assemblage (110) et du second ensemble plaque d'assemblage (150) vers un autre du premier ensemble plaque d'assemblage (110) et du second ensemble plaque d'assemblage (150), dans lequel l'ensemble de serrage (190) est capable de serrer la pièce de travail (10) entre le premier ensemble plaque d'assemblage (110) et le second ensemble plaque d'assemblage (150) de telle sorte que la force de serrage est appliquée à la pièce de travail (10).

13. Système selon l'une quelconque des revendications 1 à 12, dans lequel la chaleur appliquée se transfère dans la pièce de travail (10) par conduction thermique et fait fondre le film thermoplastique (16) afin de former le joint (30) entre le premier composant thermoplastique (12) et le second composant thermoplastique (14) de la pièce de travail (10).

14. Procédé (500) permettant d'assembler un premier composant thermoplastique (12) d'une pièce de travail (10) avec un second composant thermoplastique (14) de la pièce de travail (10), le procédé (500) comprenant :
le serrage (502) de la pièce de travail (10) entre un premier ensemble plaque d'assemblage (110) et un second ensemble plaque d'assemblage (150), dans lequel le premier ensemble plaque d'assemblage (110) comprend un boîtier (112), une plaque chauffante (114), et un isolant thermique (116) disposé entre le boîtier (112) et la plaque chauffante (114), et dans lequel la plaque chauffante (114) définit une surface de chauffage (118) ;
le transfert (503) de la chaleur d'au moins l'un du premier ensemble plaque d'assemblage (110) et du second ensemble plaque d'assemblage (150) à la pièce de travail (10) pour établir un joint (30) entre le premier composant thermoplastique (12) et le second composant thermoplastique (14) ;
l'assemblage (501) de la pièce de travail (10) avant le serrage (502) de la pièce de travail (10), dans lequel l'assemblage (501) de la pièce de travail comprend le positionnement d'un film thermoplastique (16) entre le premier composant thermoplastique (12) et le second composant thermoplastique (14),
dans lequel le premier composant thermoplastique (12) a une première température de fusion, le second composant thermoplastique (14) a une deuxième température de fusion, et le film thermoplastique (16) a une troisième température de fusion, et dans lequel la première température de fusion et la deuxième température de fusion sont toutes deux supérieures à la troisième température de fusion, et
dans lequel la surface de chauffage (118) de la plaque chauffante (114) est flexible et conformable pour venir en prise avec une surface profilée d'une pièce de travail (10).

15. Procédé (500) la revendication 14, dans lequel la chaleur appliquée se transfère dans la pièce de travail (10) par conduction thermique et fait fondre le film thermoplastique (16) afin de former le joint (30) entre le premier composant thermoplastique (12) et le second composant thermoplastique (14).
